# EUROPÄISCHE PATENTSCHRIFT

(11) **EP 1 454 711 B1**
(45) Veröffentlichungstag und Bekanntmachung des Hinweises auf die Patenterteilung: **15.11.2006**
(21) Anmeldenummer: 04004319.2
(22) Anmeldetag: 26.02.2004
(51) Int. Cl.: B23Q 39/04

(54) **Mehrspindeldrehmaschine mit Schwenkarmhandhabungseinrichtung**
Multispindle lathe with articulated workpiece manipulator
Tour multibroche avec manipulateur de pièces articulé

(30) Priorität: 06.03.2003 DE 10310997
(43) Veröffentlichungstag der Anmeldung: 08.09.2004
(73) Patentinhaber: Index-Werke GmbH & Co. KG Hahn & Tessky, 73730 Esslingen (DE)
(72) Erfinder: Trautmann, Günther Heinrich, 73230 Kirchheim/Teck (DE)
(74) Vertreter: Hoeger, Stellrecht & Partner Patentanwälte

(56) Entgegenhaltungen:
- WO-A-03/103892
- DE-A- 4 023 771
- GB-A- 1 442 597

## Beschreibung

Die Erfindung betrifft eine Mehrspindeldrehmaschine nach dem Oberbegriff des Anspruchs 1 (siehe z.B., GB-1 442 597-A).

Bei derartigen Mehrspindeldrehmaschinen besteht stets das Problem, die Bearbeitung der Werkstücke möglichst optimal zu gestalten, um die vielfältigen Bearbeitungsmöglichkeiten einer derartigen Mehrspindeldrehmaschine möglichst optimal auszunützen.

Aus diesem Grund liegt der Erfindung die Aufgabe zugrunde, auch die Zeitpunkte für die Handhabung und die Zeiträume für die Handhabung von Werkstücken mit möglichst wenig Verlust an Bearbeitungszeit zu gestalten.

Diese Aufgabe wird durch eine Mehrspindeldrehmaschine nach Anspruch 1 gelöst.

Der Vorteil der erfindungsgemäßen Werkzeugmaschine ist somit darin zu sehen, daß mit dieser die Möglichkeit besteht, ohne die Bearbeitungsmöglichkeiten der Werkstücke durch die Vielzahl von Spindeln einzuschränken, eine möglichst effiziente und flexibel an unterschiedliche Bearbeitungsaufgaben anpaßbare Handhabung der Werkstücke möglich ist.

Hinsichtlich der Ausbildung der Schwenkarmhandhabungseinrichtung wurden bislang keine näheren Angaben gemacht. So sieht ein besonders vorteilhaftes Ausführungsbeispiel vor, daß die Schwenkarmhandhabungseinrichtung eine um eine quer zur Spindeltrommelachse verlaufende Fußschwenkachse gegenüber dem Fuß drehbare Schwenkarmbasis umfaßt. Diese Lösung ist hinsichtlich ihrer kinematischen Ausbildung für eine schnelle und effiziente Handhabung der Werkstücke besonders günstig.

Ferner sieht eine kinematisch günstige Ausbildung einer derartigen Schwenkarmhandhabungseinrichtung vor, daß an der Schwenkarmbasis ein Knickarm mit einem eine quer zur Fußschwenkachse verlaufende erste Schwenkachse aufweisenden ersten Schwenkgelenk gelagert ist und daß der Knickarm einen von der ersten Schwenkachse ausgehenden ersten Arm, einen gegenüber dem ersten Arm durch ein Knickgelenk um eine zur ersten Schwenkachse parallele Knickachse schwenkbaren zweiten Arm und einen gegenüber dem zweiten Arm durch ein zweites Schwenkgelenk um eine zweite Schwenkachse schwenkbaren Greifarm aufweist.

Eine derartige, mit einem Knickarm versehene Schwenkarmhandhabungseinrichtung ist einerseits flexibel und andererseits besonders für schnelle Bewegungen des Greifarms zum Handhaben der Werkstücke geeignet.

Um mit der Schwenkarmhandhabungseinheit möglichst universell auf Werkstückspindeln in möglichst vielen Spindelstationen der Spindeltrommel zugreifen zu können, ist vorzugsweise der zweite Arm so ausgebildet, daß dieser eine quer zur Knickachse und zur zweiten Schwenkachse verlaufende Rotationsachse aufweist, um welche das zweite Schwenkgelenk gegenüber dem Knickgelenk verdrehbar ist. Mit einer derartigen Ausbildung der Schwenkarmhandhabungseinheit besteht bei entsprechender Dimensionierung des Knickarms aufgrund der Zahl der vorhandenen Achsen grundsätzlich die Möglichkeit, auf sämtliche Werkstückspindeln der Spindeltrommel in sämtlichen Spindelpositionen zugreifen zu können.

Lediglich im Fall nicht rotationssymmetrischer Teile ist es noch günstiger, wenn der Greifarm eine quer zur zweiten Schwenkachse verlaufende Rotationsachse aufweist, um welche ein Werkstückgreifer der Schwenkarmhandhabungseinrichtung gegenüber dem zweiten Schwenkgelenk verdrehbar ist.

Hinsichtlich der Ausrichtung der Fußschwenkachse im Raum wurden bislang keine näheren Angaben gemacht. So könnte die Fußschwenkachse horizontal verlaufen.

Bei einem für die Werkstückhandhabung besonders günstigen Ausführungsbeispiel ist vorgesehen, daß die Fußschwenkachse quer zu einer durch eine Grundfläche des Maschinengestells definierten Ebene verläuft.

Noch vorteilhafter ist es, wenn die Fußschwenkachse ungefähr senkrecht zu der Ebene verläuft.

Eine besonders hinsichtlich der Bewegungsabläufe der Schwenkarmhandhabungseinrichtung günstige Ausführung sieht vor, daß die Fußschwenkachse ungefähr in vertikaler Richtung verläuft. Dies bedeutet, daß Abweichungen von bis zu 20° zu einer Vertikalen auftreten können.

Hinsichtlich der Anordnung der Fußschwenkachse wurden im Zusammenhang mit der bisherigen Erläuterung der einzelnen Ausführungsbeispiele ebenfalls keine näheren Angaben gemacht. Es ist im Rahmen der Erfindung denkbar, daß die Fußschwenkachse seitlich des Maschinengestells verläuft. Eine hinsichtlich der Erreichbarkeit sämtlicher Werkstückspindeln in sämtlichen Spindelstationen besonders günstige Lösung sieht vor, daß die Fußschwenkachse einem mittigen Bereich der Stirnseite der Spindeltrommel gegenüberliegend angeordnet ist, so daß die Fußschwenkachse auf jeder Seite der Spindeltrommelachse neben dieser verlaufen kann.

Noch besser ist es, insbesondere um eine möglichst große Symmetrie der von der Schwenkarmhandhabungseinrichtung durchzuführenden Bewegungsmöglichkeiten zu erreichen, wenn die Fußschwenkachse nahe der Spindeltrommelachse verläuft.

Eine hinsichtlich der erreichbaren Symmetrie besonders günstige Lösung sieht vor, daß die Fußschwenkachse die Spindeltrommelachse schneidet.

Im Rahmen der bisherigen Erläuterung der Erfindung ist es denkbar, daß der Fuß neben dem Maschinengestell angeordnet ist, allerdings in definierter Relation zu diesem.

Zweckmäßigerweise ist der Fuß an dem Maschinengestell angeordnet, wobei der Fuß in beliebiger Position am Maschinengestell gehalten sein kann.

Hinsichtlich der Anordnung des Fußes an dem Maschinengestell sind die unterschiedlichsten Lösungen denkbar. Beispielsweise wäre es denkbar, den Fuß auf einem Unterbau des Maschinengestells anzuordnen.

Hinsichtlich der Anordnung eines Werkstückübergaberaums, in welchem die Schwenkarmhandhabungseinrichtung Werkstücke aufnehmen oder ablegen kann, wurden bislang ebenfalls keine näheren Angabe gemacht. So ist aufgrund der Flexibilität der Schwenkarmhandhabungseinrichtung grundsätzlich eine beliebig flexible Anordnung des Werkstückübergaberaums relativ zum Arbeitsraum zur Schwenkarmbasis und zum Maschinengestell denkbar.

Um eine möglichst zeitgünstige Kinematik bei der Handhabung der Werkstücke zu erreichen, ist vorzugsweise vorgesehen, daß ein Werkstückübergaberaum niedriger als die Schwenkarmbasis angeordnet ist.

Besonders günstig ist es hinsichtlich der Anordnung des Werkstückübergaberaums, wenn dieser ungefähr in Höhe eines Unterbaus des Maschinengestells angeordnet ist.

Hinsichtlich der Anordnung des Werkstückübergaberaums relativ zur Spindeltrommel wurden keine näheren Angaben gemacht. Beispielsweise wäre es denkbar, den Werkstückübergaberaum seitlich neben die Spindeltrommel und somit gegebenenfalls auch neben das Maschinengestell zu legen.

Ein hinsichtlich der Kinematik besonders günstiges Ausführungsbeispiel sieht jedoch vor, daß in einem sich vor der Stirnseite der Spindeltrommel erstreckenden Bereich ein Werkstückübergaberaum angeordnet ist, d. h., daß der Werkstückübergaberaum ebenfalls in dem Bereich liegt, in dem sich der Knickarm der Schwenkarmhandhabungseinrichtung ohnehin bewegt, wenn ein Zugriff auf Werkstücke in den Werkstückspindeln erfolgen soll.

Um möglichst kurze Wege bei der Handhabung des Werkstücks zu haben, sieht ein vorteilhaftes Ausführungsbeispiel vor, daß der Werkstückübergaberaum zwischen der Stirnseite der Spindeltrommel und dem Fuß angeordnet ist.

Alternativ sieht eine andere günstige Lösung vor, daß der Werkstückübergaberaum auf einer dem Arbeitsraum gegenüberliegenden Seite der Fußschwenkachse angeordnet ist, eine Lösung, bei welcher mehr Raum für die Werkstücktransporteinrichtung beispielsweise auch durch Anordnung derselben außerhalb des Maschinengestells zur Verfügung steht.

Um eine möglichst große Flexibilität auch bei der Bearbeitung unterschiedlicher Werkstücke in einer derartigen Mehrspindeldrehmaschine zu erreichen, ist vorzugsweise vorgesehen, daß die Schwenkarmhandhabungseinrichtung derart ausgebildet ist, daß mit dieser ein Zugriff auf in allen Werkstückspindeln angeordnete Werkstücke möglich ist.

Mit einer derartigen Ausbildung der Schwenkarmhandhabungseinrichtung besteht eine optimale Flexibilität hinsichtlich der Bearbeitung auch unterschiedlichster Werkstücke. Beispielsweise ist es denkbar, die Mehrspindeldrehmaschine dabei so zu betreiben, daß Werkstücke in einer Spindelstation eingesetzt werden, über eine oder mehrere nachfolgende Spindelstationen bearbeitet werden und in einer der weiteren Spindelstation entnommen werden. Es besteht bei dieser Lösung aber auch die Möglichkeit, im Extremfall die Mehrspindeldrehmaschine als Ansammlung von Einspindeldrehmaschinen zu betreiben und somit beispielsweise in jeder Spindelstation ein Werkstück einzusetzen und zu entnehmen. Zusätzlich bestehen alle Bearbeitungsmöglichkeiten, die eine Kombination dieser beiden beschriebenen Lösungen darstellen, so daß teilweise sogar unterschiedliche Arten von Bearbeitungen über unterschiedliche Spindelstationen hinweg, also beispielsweise die Bearbeitung von verschiedenen Teilen, realisierbar sind.

Darüber hinaus besteht bei der erfindungsgemäßen Lösung auch die Möglichkeit, einen Handhabungsvorgang für das Werkstück in einer Werkstückspindel auszuführen, während weiterhin in den anderen Werkstückspindeln noch eine Bearbeitung erfolgt.

Besonders günstige Bewegungsabläufe der Schwenkarmhandhabungseinrichtung sind dann erreichbar, wenn eine Steuerung für die Schwenkarmhandhabungseinrichtung vorgesehen ist, welche beim Transport von Werkstücken zwischen dem Werkstückübergaberaum und den Werkstückspindeln den Knickarm im wesentlichen in einer senkrecht zur Knickarmachse verlaufenden Ebene bewegt, und eine Drehung der Schwenkarmbasis um die Fußschwenkachse um weniger als 90° ausführt. Bei einer derartigen Art der Steuerung der Schwenkarmhandhabungseinrichtung werden aufgrund der zu bewegenden Massen zeitaufwendige Schwenkbewegungen um die Fußschwenkachse weitgehend vermieden und die Bewegungen im wesentlichen auf Bewegungen des Knickarms reduziert, dessen Knickbewegungen schneller erfolgen können als eine Schwenkbewegung des gesamten Knickarms um die Fußschwenkachse.

Eine besonders vorteilhafte Lösung sieht vor, daß eine Steuerung für die Schwenkarmhandhabungseinheit vorgesehen ist, welche zum Einlegen in und Entnehmen von Werkstücken aus den Werkstückspindeln die Schwenkarmbasis im wesentlichen nur innerhalb eines Winkelbereichs um die Fußschwenkachse bewegt, welche maximal dem doppelten Winkelbereich entspricht, um welchen die Schwenkarmbasis drehbar sein muß, um Zugriff auf sämtliche Werkstückspindeln in sämtlichen Spindelstationen zu haben.

Im Zusammenhang mit dem bislang beschriebenen Ausführungsbeispiel wurde nicht näher darauf eingegangen, wie die Bearbeitung der Werkstücke in den verschiedenen Spindelstationen erfolgen soll, insbesondere wie die Werkzeuge zur Bearbeitung der Werkstücke angeordnet sein sollen.

Grundsätzlich wäre es möglich, separat am Maschinengestell Werkzeugträger hierzu vorzusehen.

Eine besonders günstige Lösung sieht vor, daß die Werkstückaufnahmen für die Werkstücke sowie Werkzeugträger für Werkzeuge auf derselben Seite des Arbeitsraums angeordnet sind.

Besonders günstig ist es hierbei, wenn die Werkzeugträger an einem die Spindeltrommel aufnehmenden Ständer des Maschinengestells gelagert sind und somit der Ständer sowohl Basis für die Lagerung der Spindeltrommel ist als auch Basis für die Werkzeugträger.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine perspektivische Ansicht eines ersten Ausführungsbeispiels einer erfindungsgemäßen Werkzeugmaschine;
- Fig. 2: eine Draufsicht auf einen eine Spindeltrommel aufnehmenden Ständer des Maschinengestells in Richtung des Pfeils A in Fig. 1;
- Fig. 3: eine perspektivische Darstellung einer Schwenkarmhandhabungseinrichtung gemäß dem ersten Ausführungsbeispiel;
- Fig. 4: eine perspektivische Ansicht ähnlich Fig. 1 beim Zugriff auf ein Werkstück in einer Spindelstation;
- Fig. 5: eine Darstellung ähnlich Fig. 4 beim Zugriff auf ein Werkstück einer anderen Spindelstation;
- Fig. 6: eine Darstellung eines Zugriffs auf eine Spindelstation in Richtung des Pfeils B in Fig. 1;
- Fig. 7: eine Darstellung ähnlich Fig. 6 bei einem zweiten Ausführungsbeispiel einer erfindungsgemäßen Mehrspindeldrehmaschine und
- Fig. 8: eine Darstellung ähnlich Fig. 4 bei einem dritten Ausführungsbeispiel einer erfindungsgemäßen Mehrspindeldrehmaschine.

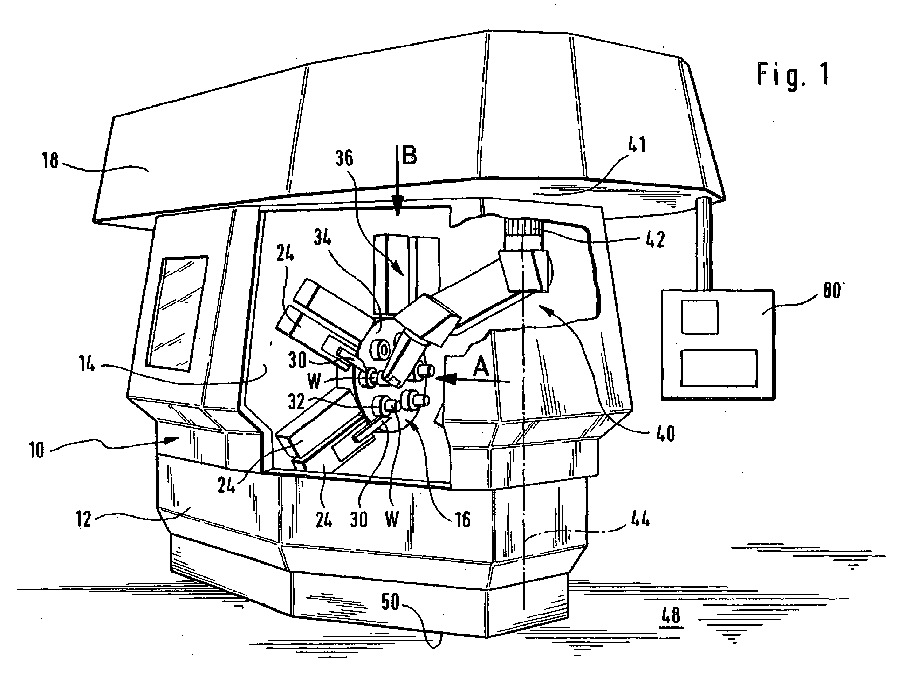

Ein Ausführungsbeispiel einer erfindungsgemäßen Mehrspindeldrehmaschine, dargestellt in Fig. 1, umfaßt ein als Ganzes mit 10 bezeichnetes Maschinengestell, welches einen Unterbau 12 aufweist, auf welchem ein Ständer 14 angeordnet ist, in welchem eine Spindeltrommel 16 drehbar gelagert ist. Auf dem Ständer 14 ist ferner noch ein Überbau 18 angeordnet.

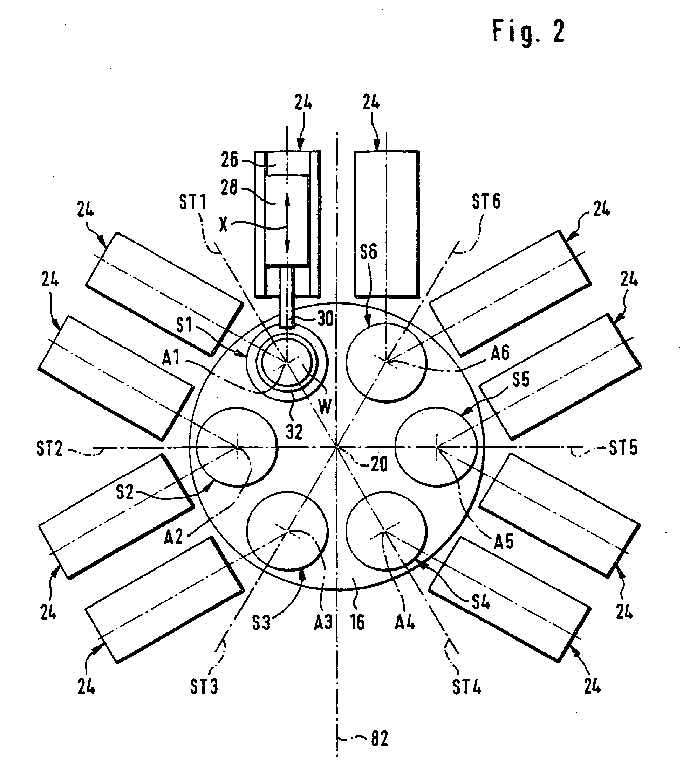

Die Spindeltrommel 16 ist, wie in Fig. 2 dargestellt, an dem Ständer 14 um eine Spindeltrommelachse 20 drehbar und weist eine Vielzahl von vorzugsweise in gleichem radialem Abstand um die Spindeltrommelachse 20 herum angeordneten Werkstückspindeln S1 bis S6 auf, die ihrerseits wiederum um Spindelachsen A1 bis A6 relativ zur Spindeltrommel 16 drehbar sind.

Vorzugsweise ist die Spindeltrommel 16 gegenüber dem Ständer 14 um die Spindeltrommelachse 20 derart drehbar, daß die einzelnen Werkstückspindeln S1 bis S6 jeweils in definierte Spindelstationen ST1 bis ST6 bewegbar sind, wobei die Spindelstationen ST1 bis ST6 relativ zum Ständer 14 stationär angeordnet sind und somit durch Weiterschalten der Spindeltrommel 16 beispielsweise alle Spindeln S1 bis S6 in die Spindelstation ST1 bringbar sind.

Ferner ist jeder der Spindelstationen ST1 bis ST6 mindestens ein Werkzeugträger 24 zugeordnet, welcher ein Schlittensystem mit einem ersten Schlitten 26 umfaßt, der relativ zum Ständer 14 in Richtung parallel zu der in der jeweiligen Spindelstation ST stehenden Spindelachse A und somit in einer Z-Richtung bewegbar ist und einen zweiten Schlitten 28, welcher relativ zum ersten Schlitten 26 in radialer Richtung zu der in der jeweiligen Spindelstation ST stehenden Spindelachse A und somit in einer X-Richtung bewegbar ist, um ein Werkzeug 30 zur Bearbeitung eines Werkstücks 30 in der X-Richtung und der Z-Richtung bewegen zu können.

Eine derartige Mehrspindeldrehmaschine ist in der EP 0 834 379 A beschrieben, auf welche vollinhaltlich Bezug genommen wird.

Vorzugsweise sind bei der erfindungsgemäßen Mehrspindeldrehmaschine zumindest einem Teil der Spindelstationen ST mehrere derartige Werkzeugträger 24, beispielsweise zwei derartige Werkzeugträger 24 zugeordnet, wie am Beispiel der Spindelstationen ST1, ST2, ST5 und ST6 in Fig. 2 zeichnerisch dargestellt.

Zur Aufnahme eines Werkstücks W ist jede der Werkstückspindeln S1 bis S6 mit einer Werkstückaufnahme 32 versehen, die je nach Werkstück W beispielsweise als Spannzange oder Spannfutter ausgebildet ist.

Wie in Fig. 1 dargestellt, sind die Werkstücke W in den Werkstückaufnahmen 32 derart angeordnet, daß diese in einen vor einer Stirnseite 34 der Spindeltrommel 16 liegenden Arbeitsraum 36 hineinragen, wobei - wie in Fig. 1 und 2 dargestellt - sowohl die Werkstückaufnahmen 32 der Werkstückspindeln S1 bis S6 als auch die Werkzeuge 30 der einzelnen Werkzeugträger 24 auf derselben Seite des Arbeitsraums 36 liegen und somit der Arbeitsraum 36 von seinen übrigen Seiten her ohne Behinderung durch die Werkzeugträger 24 und die Werkzeuge 30 sowie die Werkstückaufnahmen 32 zugänglich ist.

Aus diesem Grund erfolgt eine Handhabung der Werkstücke W durch eine Schwenkarmhandhabungseinrichtung 40, welche in einem vor der Stirnseite 34 liegenden Bereich 38 und auf einer der Stirnseite 34 gegenüberliegenden Seite des Arbeitsraums 36 angeordnet ist.

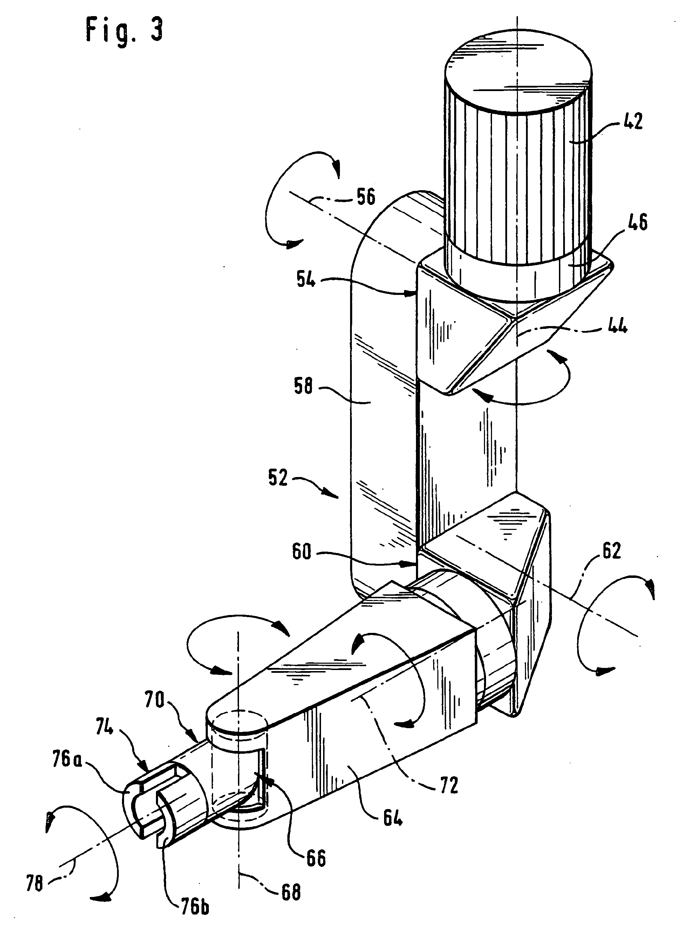

Zur Handhabung aller Werkstücke W, die in den einzelnen Spindelstationen ST1 bis ST6 angeordnet sind, ist, wie in Fig. 1 dargestellt, die Schwenkarmhandhabungseinrichtung 40 vorgesehen, welche, wie in Fig. 1 und 3 dargestellt, einen an dem Überbau 18 in einem sich über den Arbeitsraum 36 hinweg erstreckenden Bereich 41 hängend angeordneten Fuß 42 aufweist, wobei der Fuß 42 fest an dem Bereich 41 des Überbaus 18 montiert ist.

An dem Fuß 42 ist eine Schwenkarmbasis 46 um eine Fußschwenkachse 44 drehbar gelagert, wobei die Fußschwenkachse 44 quer zu einer Ebene 48 verläuft, welche durch eine Grundfläche 50 des Maschinengestells 10 vorgegeben ist. Vorzugsweise verläuft die Fußschwenkachse 44 im wesentlichen in vertikaler Richtung. An der Schwenkarmbasis 46 ist ein als Ganzes mit 52 bezeichneter Knickarm mittels eines ersten Schwenkgelenks 54 schwenkbar gelagert, wobei das erste Schwenkgelenk 54 eine quer, vorzugsweise senkrecht zur Fußschwenkachse 44 verlaufende erste Schwenkachse 56 aufweist. Der Knickarm 52 umfaßt dabei einen von dem ersten Schwenkgelenk 54 ausgehenden ersten Arm 58, an welchem mittels eines Knickgelenks 60, welches um eine zur ersten Schwenkachse 56 parallele Knickachse 62 schwenkbar ist, ein zweiter Arm 64 des Knickarms 52 schwenkbar gelagert ist.

An dem zweiten Arm 64 ist dabei auf einer dem Knickgelenk 60 gegenüberliegenden Seite mittels eines zweiten Schwenkgelenks 66, welches um eine zweite Schwenkachse 68 schwenkbar ist, ein Greifarm 70 schwenkbar gelagert, welcher somit insgesamt durch das zweite Schwenkgelenk 66 gegenüber dem zweiten Arm 64 verschwenkbar ist.

Ferner ist der zweite Arm 64 noch mit einer quer zur Knickachse 62 verlaufenden Rotationsachse 72 versehen, welche außerdem quer zur zweiten Schwenkachse 68 verläuft, so daß das zweite Schwenkgelenk 66 gegenüber dem Knickgelenk 60 drehbar ist und somit die zweite Schwenkarmachse 68 gegenüber der Knickachse 62 verdrehbar ist, wobei bei senkrechter Ausrichtung der Rotationsachse 72 zur Knickachse 62 und zur zweiten Schwenkachse 68 die zweite Schwenkachse 68 parallel zur Knickachse 62 oder senkrecht zur Knickachse 62 verlaufend oder in sämtlichen dazwischenliegenden Drehstellungen ausgerichtet werden kann.

An dem Greifarm 70 ist ferner noch ein Werkstückgreifer 74 vorgesehen, welcher beispielsweise zwei Greifbacken 76a, 76b aufweist, um die Werkstücke W zu greifen.

Im einfachsten Fall kann der Werkstückgreifer 74 fest am Greifarm 70 gehalten sein. Eine für nicht rotationssymmetrisch greifbare Werkstücke zweckmäßige Lösung sieht jedoch vor, daß der Werkstückgreifer 74 gegenüber dem Greifarm 70 um eine quer zur zweiten Schwenkachse 68 verlaufende Rotationsachse 78 drehbar ist, um somit die Greifbacken 76a und 76b in unterschiedliche Drehstellungen relativ zur zweiten Schwenkachse 68 ausrichten zu können.

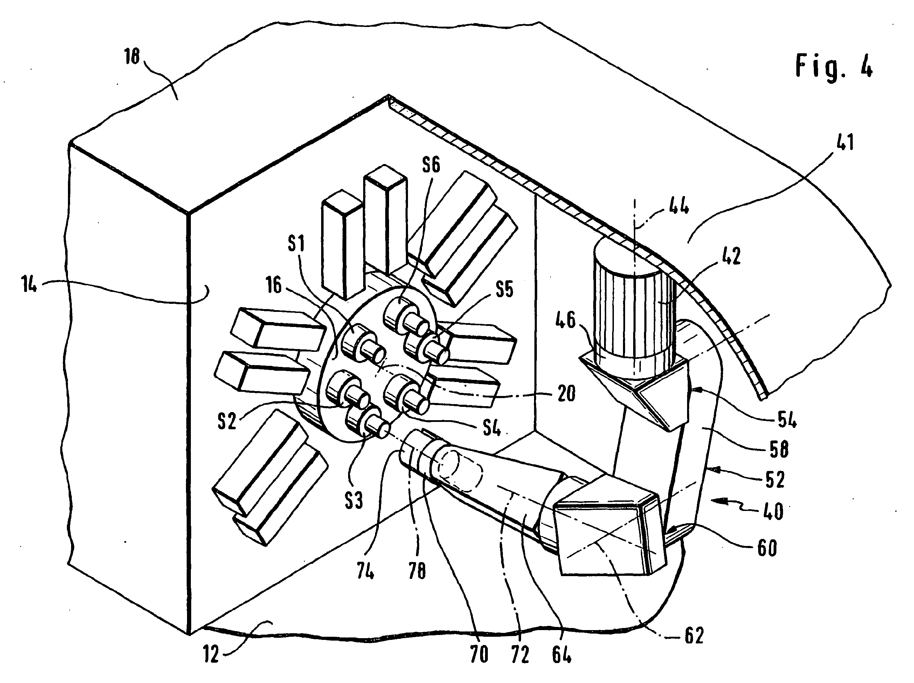

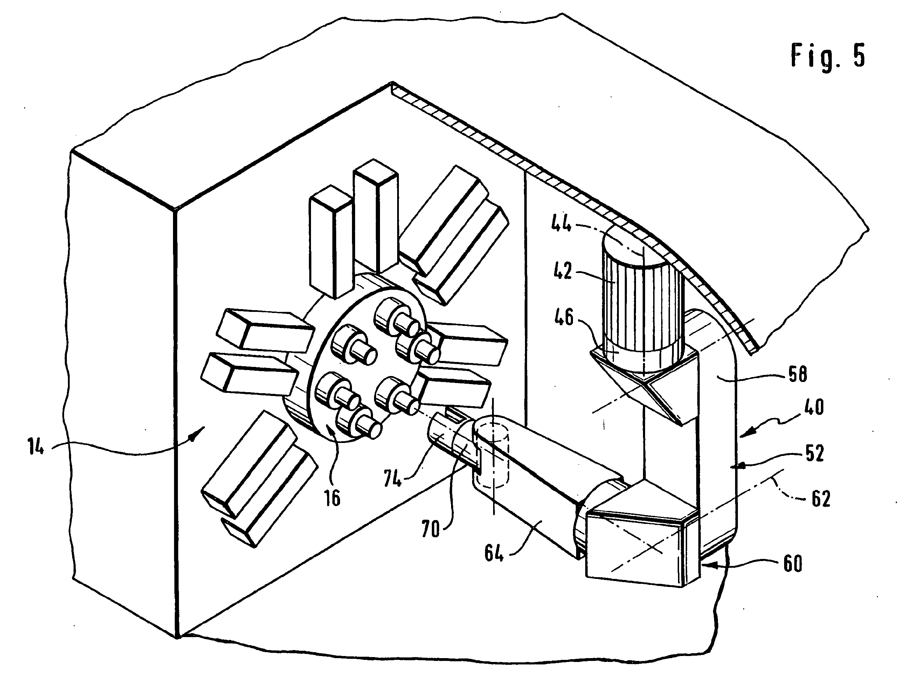

Wie in Fig. 4 und 5 dargestellt, besteht mit der erfindungsgemäßen Schwenkarmhandhabungseinrichtung 40 die Möglichkeit, diese mit einer Steuerung 80 derart zu bewegen, daß diese mit dem Werkstückgreifer 74 auf die Werkstückspindeln S1 bis S6 jeder der Spindelstationen ST1 bis ST6 der Spindeltrommel 16 zugreifen kann.

Vorzugsweise ist bei dem ersten Ausführungsbeispiel der Fuß 42 der Schwenkarmhandhabungseinrichtung 40 derart relativ zum Arbeitsraum 36 angeordnet, daß die Fußschwenkachse 44, welche vorzugsweise im wesentlichen in vertikaler Richtung verläuft, von der Spindeltrommelachse 20 geschnitten wird, so daß der Fuß 42 exakt mittig vor der Stirnseite 34 der Spindeltrommel 16 steht, allerdings so, daß zwischen dem Fuß 42 und der Frontseite 34 der Spindeltrommel 16 der Arbeitsraum 36 liegt, durch welchen die Schwenkarmhandhabungseinrichtung 40 hindurchgreift, wenn sie auf die Werkstücke W in den Werkstückaufnahmen 32 zugreifen will.

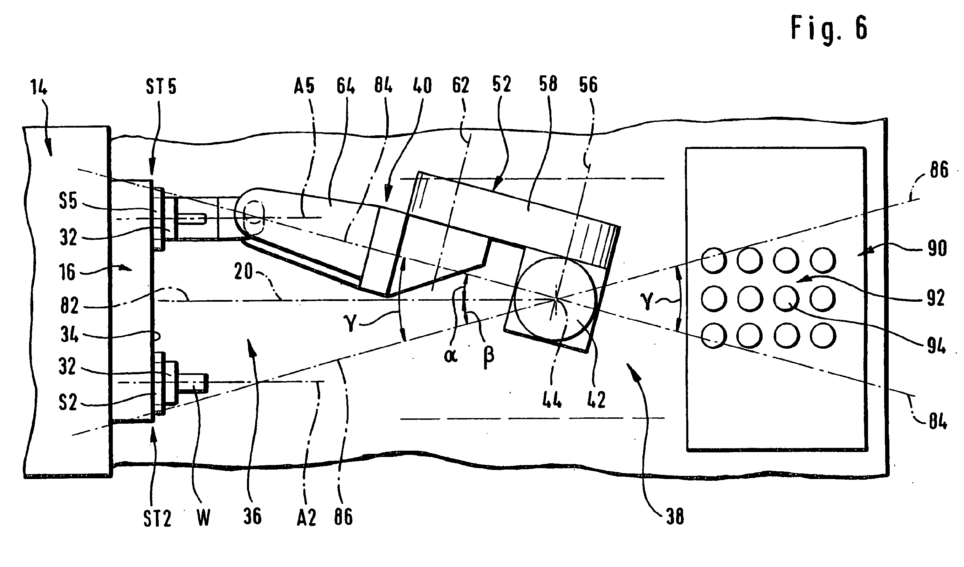

Zum Zugreifen auf die in horizontaler Richtung einen maximalen Abstand von einer vertikalen, durch die Spindeltrommelachse 20 hindurch verlaufenden Mittelebene 82 aufweisenden Spindelstationen, in Fig. 2 und 6 auf die Spindelstationen ST2 und ST5, ist dabei die Schwenkarmhandhabungseinrichtung 40 derart um die Fußschwenkachse 44 zu drehen, daß der zweite Arm 64 beim Zugriff auf die Werkstückspindel S in der Spindelstation ST5 in einer parallel zur Fußschwenkachse 44 verlaufenden Ebene 84 liegt und in dieser durch ein Verschwenken des Knickarms 52 um die erste Schwenkachse 56 und/oder ein Verschwenken des zweiten Arms 64 um die Knickachse 62 bewegbar ist.

Die Bewegungsebene 84 verläuft dabei in einem Winkel α zur vertikalen Mittelebene 92, welcher kleiner 45° ist.

Um in gleicher Weise auf die Werkstückspindel S in der gegenüberliegenden Spindelstation ST2 zugreifen zu können, ist die Schwenkarmhandhabungseinrichtung 40 derart bewegbar, daß der zweite Arm 64 in einer Bewegungsebene 86 liegt und in dieser bewegbar ist, welche ebenfalls parallel zur Fußschwenkachse 44 verläuft und gegenüber der Mittelebene 82 um einen Winkel β geneigt ist, der ebenfalls kleiner 45° ist.

Vorzugsweise sind dabei die Winkel α und β bei gleichartigen Werkstücken W gleich groß, bei unterschiedlich weit in den Arbeitsraum 36 hineinragenden Werkstücken W können die Winkel α und β geringfügig unterschiedlich sein.

Somit ist ein Verschwenken der Schwenkarmbasis 46 der Schwenkarmhandhabungseinrichtung 40 um die Fußschwenkachse 44 innerhalb eines Winkelbereichs γ ausreichend, welcher sich aus der Summe der Winkel α und β ergibt, wenn mit der Schwenkarmhandhabungseinrichtung 40 ein Zugriff auf die Werkstücke W in allen Werkstückaufnahmen 32 in allen Spindelstationen ST1 bis ST6 möglich sein soll.

Um Werkstücke W aus den Werkstückaufnahmen 32 der einzelnen Spindelstationen ST1 bis ST6 entnehmen oder in diese einsetzen zu können, ist eine als Ganzes mit 90 bezeichnete Werkstücktransporteinrichtung vorgesehen, welche einen Werkstückübergaberaum 92 mit in diesem angeordneten Werkstückübergabepositionen 94 aufweist, die so liegen, daß - wie in Fig. 6 dargestellt - ein möglichst geringes zusätzliches Verschwenken der Schwenkarmhandhabungseinrichtung 40 um die Fußschwenkachse 44 erforderlich ist.

Beispielsweise sind hierzu, wie in Fig. 6 dargestellt, die Werkstückübergabepositionen 94 zwar auf einer dem Arbeitsraum 36 gegenüberliegenden Seite der Fußschwenkachse 44 angeordnet, jedoch innerhalb des durch den Winkel γ vorgegebenen Winkelbereichs zwischen den Bewegungsebenen 84 und 86, so daß es nicht notwendig ist, die Schwenkarmhandhabungseinrichtung 40 in einem größeren Winkelbereich um die Fußschwenkachse 44 zu verschwenken.

Zum Übergeben von Werkstücken W zwischen den Werkstückübergabepositionen 92 der Werkstücktransporteinrichtung 90 und den Werkstückaufnahmen 32 in den verschiedenen Spindelstationen ST erfolgt daher primär eine Bewegung des Knickarms 52 dergestalt, daß sich der zweite Arm 64 im wesentlichen in der jeweiligen Bewegungsebene, im Fall eines Zugriffs auf die Spindelstationen ST2 und ST die Bewegungsebenen 84 bzw. 86, bewegt, um von dem Arbeitsraum 36 auf einer Seite der Fußschwenkachse 44 zu dem auf der anderen Seite der Fußschwenkachse 44 angeordneten Werkstückübergaberaum 92 mit den Werkstückübergabepositionen 94 zu kommen, wobei lediglich Schwenkbewegungen der Schwenkarmbasis 46 um die Fußschwenkachse 44 in einem Winkelbereich in der Größenordnung des Winkels γ erforderlich sind, um die einzelnen Werkstückübergabepositionen 94 innerhalb des Werkstückübergaberaums 92 zu erreichen.

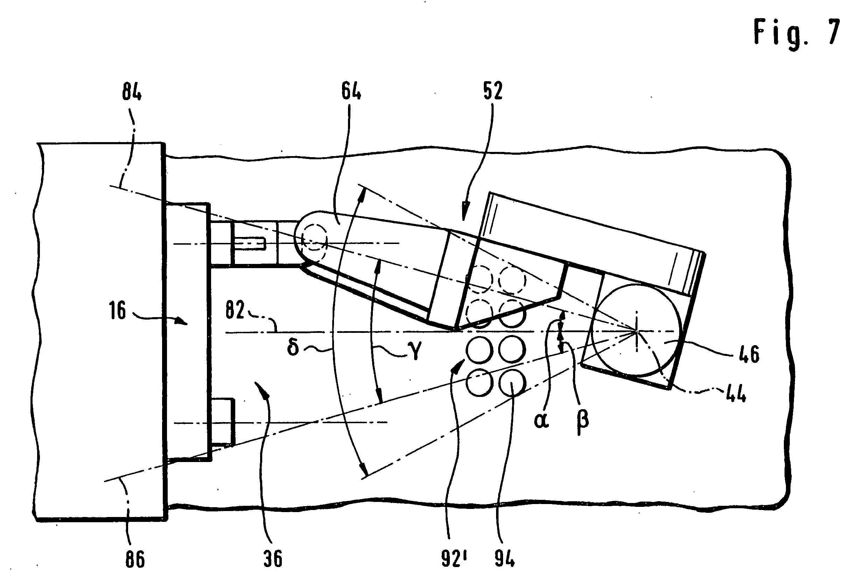

Bei einem zweiten, in Fig. 7 dargestellten Ausführungsbeispiel einer erfindungsgemäßen Mehrspindeldrehmaschine ist der Werkstückübergaberaum 92' auf derselben Seite der Fußschwenkachse 44 angeordnet wie der Arbeitsraum 36, allerdings liegt auch bei diesem Ausführungsbeispiel der Werkstückübergaberaum 92 derart, daß ein möglichst geringes Verschwenken der Schwenkarmbasis 46 um die Fußschwenkachse 44 erforderlich ist, um sämtliche Werkstückübergabepositionen im Werkstückübergaberaum 92 zu erreichen.

Beispielsweise ist zusätzlich zu der Bewegung des zweiten Arms 64 in der jeweiligen Bewegungsebene 84 oder 86 maximal noch eine geringe zusätzliche Schwenkbewegung erforderlich, die über den Winkelbereich γ hinausgeht, so daß die maximale Bewegung um die Fußschwenkachse 44 in einem Winkelbereich δ erfolgt, welcher kleiner ist als das Zweifache, noch besser kleiner als das Einskommafünffache, des Winkelbereichs γ.

Im übrigen weist das zweite Ausführungsbeispiel der erfindungsgemäßen Mehrspindeldrehmaschine dieselben Teile auf wie das erste Ausführungsbeispiel, so daß für dieselben Teile dieselben Bezugszeichen Verwendung finden und im übrigen vollinhaltlich auf die Ausführungen zum ersten Ausführungsbeispiel Bezug genommen wird.

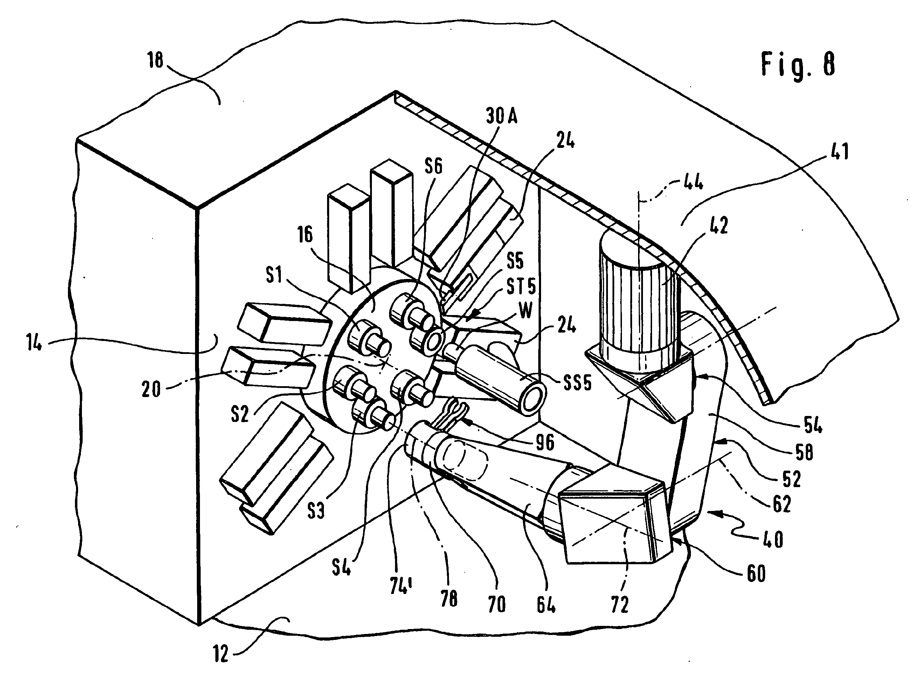

Bei einem dritten Ausführungsbeispiel einer erfindungsgemäßen Mehrspindeldrehmaschine, dargestellt in Fig. 8, ist beispielsweise der Spindelstation ST5 eine Synchronspindel SS5 zugeordnet, welche an einem der dieser Spindelstation ST5 zugeordneten Werkzeugträger 24 gehalten und mit diesem in eine koaxial zu der Spindelachse A5 stehende Position einfahrbar und aus dieser wieder herausfahrbar ist.

Ferner ist der Werkstückgreifer 74' als Wellengreifer ausgebildet und weist eine Greifzange 96 auf, mit welcher der Werkstückgreifer 74' in der Lage ist, das Werkstück W auch dann zu greifen, wenn dies in der Synchronspindel SS5 gehalten ist und somit das Werkstück W auch aus der Synchronspindel SS5 zu entnehmen oder gegebenenfalls auch in diese einzusetzen.

Damit besteht die Möglichkeit, in der Spindelstation ST5 ein zunächst in der Werkstückspindel S5 bearbeitetes Werkstück W sowohl in der Arbeitsspindel S5 als auch in der Synchronspindel SS5 aufzunehmen und mit einem Abstechwerkzeug 30A abzustechen, welches an dem anderen, der Spindelstation ST5 zugeordneten Werkzeugträger 24 gehalten und mit diesem in Richtung des Werkstücks W bewegbar ist.

Das abgestochene und in der Synchronspindel SS5 gehaltene Werkstück W kann dann von dem Werkstückgreifer 74' mittels der Schwenkarmhandhabungseinrichtung 40 in der im Zusammenhang mit den vorstehenden Ausführungsbeispielen beschriebenen Art und Weise entnommen und in den Werkstückübergaberaum 92 verbracht werden.

Die Synchronspindel SS5 ist somit für die Frage der Handhabung in gleicher Weise zu betrachten, wie eine weitere, der Spindelstation ST5 zugeordnete Werkstückspindel.

Im übrigen entspricht das dritte Ausführungsbeispiel in vollem Umfang den voranstehenden Ausführungsbeispielen, so daß dieselben Teile mit denselben Bezugszeichen versehen sind und vollinhaltlich auf die Ausführungen zu den voranstehenden Ausführungsbeispielen Bezug genommen wird.

## Patentansprüche

1. Mehrspindeldrehmaschine umfassend ein Maschinengestell (10), eine am Maschinengestell (10) um eine Spindeltrommelachse (20) drehbar gelagerte Spindeltrommel (16) mit einer einem Arbeitsraum (36) zugewandten Stirnseite (34), eine Vielzahl von in der Spindeltrommel (16) um Spindelachsen (A) drehbar gelagerten Werkstückspindeln (5) mit dem Arbeitsraum (36) zugewandt angeordneten Werkstückaufnahmen (32), in welche in dem Arbeitsraum (36) zu bearbeitende Werkstücke (W) einsetzbar sind, und eine Schwenkarmhandhabungseinrichtung (40), die so ausgebildet ist, dass mit dieser durch den Arbeitsraum (36) hindurch Werkstücke (W) in die Werkstückaufnahmen (32) der Werkstückspindeln (S, SS) einsetzbar und/oder aus diesen entnehmbar sind
**dadurch gekennzeichnet, dass** die Schwenkarmhandhabungseinrichtung (40) einen Fuß (42) aufweist, der auf einer der Stirnseite (34) der Spindeltrommel (16) gegenüberliegenden Seite des Arbeitsraums (36) angeordnet ist, und dass der Fuß (42) hängend an einem sich über den Arbeitsraum (36) hinwegerstreckenden Überbau (18) des Maschinengestells (10) angeordnet ist.

2. Mehrspindeldrehmaschine nach Anspruch 1, **dadurch gekennzeichnet, dass** die Schwenkarmhandhabungseinrichtung (40) eine um eine quer zur Spindeltrommelachse (20) verlaufende Fußschwenkachse (44) gegenüber dem Fuß (42) drehbare Schwenkarmbasis (46) umfasst.

3. Mehrspindeldrehmaschine nach Anspruch 2, **dadurch gekennzeichnet, dass** an der Schwenkarmbasis (46) ein Knickarm (52) mit einem eine quer zur Fußschwenkachse (44) verlaufende erste Schwenkachse (56) aufweisenden ersten Schwenkgelenk (54) gelagert ist und dass der Knickarm (52) einen von der ersten Schwenkachse (56) ausgehenden ersten Arm (58), einen gegenüber dem ersten Arm (58) durch ein Knickgelenk (60) um eine zur ersten Schwenkachse (56) parallele Knickachse (62) schwenkbaren zweiten Arm (64) und einen gegenüber dem zweiten Arm (64) durch ein zweites Schwenkgelenk (66) um eine zweite Schwenkachse (68) schwenkbaren Greifarm (70) aufweist.

4. Mehrspindeldrehmaschine nach Anspruch 3, **dadurch gekennzeichnet, dass** der zweite Arm (64) eine quer zur Knickachse (62) und zur zweiten Schwenkachse (68) verlaufende Rotationsachse (72) aufweist, um welche das zweite Schwenkgelenk (66) gegenüber dem Knickgelenk (60) verdrehbar ist.

5. Mehrspindeldrehmaschine nach Anspruch 3 oder 4, **dadurch gekennzeichnet, dass** der Greifarm (70) eine quer zur zweiten Schwenkachse (68) verlaufende Rotationsachse (78) aufweist, um welche ein Werkstückgreifer (74) gegenüber dem zweiten Schwenkgelenk (66) verdrehbar ist.

6. Mehrspindeldrehmaschine nach einem der Ansprüche 2 bis 5, **dadurch gekennzeichnet, dass** die Fußschwenkachse (44) quer zu einer durch eine Grundfläche (50) des Maschinengestells definierten Ebene (48) verläuft.

7. Mehrspindeldrehmeschine nach einem der Ansprüche 2 bis 6, **dadurch gekennzeichnet, dass** die Fußschwenkachse (44) ungefähr senkrecht zu der Ebene (48) verläuft.

8. Mehrspindeldrehmaschine nach einem der voranstehenden Ansprüche, **dadurch gekennzeichnet, dass** die Fußschwenkachse (44) ungefähr in vertikaler Richtung verläuft.

9. Mehrspindeldrehmaschine nach einem der Ansprüche 2 bis 8, **dadurch gekennzeichnet, dass** die Fußschwenkachse (44) einem mittigen Bereich der Stirnseite (34) der Spindeltrommel (16) gegenüberliegend angeordnet ist,

10. Mehrspindeldrehmaschine nach Anspruch 9, **dadurch gekennzeichnet, dass** die Fußschwenkachse (44) nahe der Spindeltrommelachse (20) verläuft.

11. Mehrspindeldrehmaschine nach einem der Ansprüche 2 bis 10, **dadurch gekennzeichnet, dass** die Fußschwenkachse (44) die Spindeltrommelachse (20) schneidet.

12. Mehrspindeldrehmaschine nach einem der voranstehenden Ansprüche, **dadurch gekennzeichnet, dass** ein Werkstückübergaberaum (92) niedriger als die Schwenkarmbasis (46) angeordnet ist.

13. Mehrspindeldrehmaschine nach einem der voranstehenden Ansprüche, **dadurch gekennzeichnet, dass** der Werkstückübergaberaum (92) ungefähr in Höhe eines Unterbaus (12) des Maschinengestells (10) angeordnet ist.

14. Mehrspindeldrehmaschine nach einem der voranstehenden Ansprüche, **dadurch gekennzeichnet, dass** in einem sich vor der Stirnseite (34) der Spindeltrommel (16) erstreckenden Bereich ein Werkstückübergaberaum (92) angeordnet ist.

15. Mehrspindeldrehmaschine nach Anspruch 14, **dadurch gekennzeichnet, dass** der Werkstückübergaberaum (92') zwischen der Stirnseite (34) und dem Fuß (42) angeordnet ist.

16. Mehrspindeldrehmaschine nach einem der Ansprüche 1 bis 14, **dadurch gekennzeichnet, dass** der Werkstückübergaberaum (92) auf einer dem Arbeitsraum (36) gegenüberliegenden Seite der Fußschwenkachse (44) angeordnet ist.

17. Mehrspindeldrehmaschine nach einem der voranstehenden Ansprüche, **dadurch gekennzeichnet, dass** die Schwenkarmhandhabungseinheit (40) derart ausgebildet ist, dass mit dieser ein Zugriff auf in allen Werkstückspindeln (S, SS) angeordnete Werkstücke (W) möglich ist.

18. Mehrspindeldrehmaschine nach einem der voranstehenden Ansprüche, **dadurch gekennzeichnet, dass** eine Steuerung (80) für die Schwenkarmhandhabungseinrichtung (40) vorgesehen ist, welche beim Transport von Werkstücken (W) zwischen dem Werkstückübergaberaum (92) und den Werkstückspindeln (S, SS) den Knickarm (52) im Wesentlichen in einer senkrecht zur Knickachse (62) verlaufenden Ebene (82, 84) bewegt, und eine Drehung der Schwenkarmbasis (46) um die Fußschwenkachse (44) um weniger als 90° ausführt.

19. Mehrspindeldrehmaschine nach einem der voranstehenden Ansprüche, **dadurch gekennzeichnet, dass** eine Steuerung (80) für die Schwenkarmhandhabungseinheit (40) vorgesehen ist, welche zum Einlegen in und/oder Entnehmen von Werkstücken (W) aus den Werkstückspindein (S, SS) die Schwenkarmbasis (46) im Wesentlichen nur innerhalb eines Winkelbereichs (δ) um die Fußschwenkachse (44) bewegt, welcher einem Zweifachen des Winkelbereichs (γ) entspricht, der erforderlich ist, um auf sämtliche Werkstückspindeln (S, SS) in sämtlichen Spindelstationen (ST) zuzugreifen.

20. Mehrspindeldrehmaschine nach einem der voranstehenden Ansprüche, **dadurch gekennzeichnet, dass** die Werkstückaufnahmen (32) für die Werkstücke (W) sowie Werkzeugträger (24) für Werkzeuge (30) auf derselben Seite des Arbeitsraums (36) angeordnet sind.

## Claims

1. Multi-spindle lathe, comprising a lathe frame (10), a spindle drum (16), which is mounted on the lathe frame (10) such that it can rotate about a spindle drum axis (20) and has an end face (34) facing a working space (36), a multiplicity of workpiece spindles (S), which are mounted in the spindle drum (16) in such a manner that they can rotate about spindle axes (A) and have workpiece-accommodating means (32), which are disposed so as to face the working space (36) and into which workpieces (W) which are to be machined in the working space (36) can be inserted, and a pivot-arm handling device (40) which is formed in such a way that it can be used to insert workpieces (W) into the workpiece-accommodating means (32) of the workpiece spindles (S, SS) or to remove them therefrom, through the working space (36), **characterized in that** the pivot-arm handling device (40) has a foot (42) which is disposed on an opposite side of the working space (36) from the end face (34) of the spindle drum (16) and **in that** the foot (42) is disposed hanging from a superstructure (18), which extends over and beyond the working space (36), of the lathe frame (10).

2. Multi-spindle lathe according to Claim 1, **characterized in that** the pivot-arm handling device (40) comprises a pivot-arm base (46), which can rotate with respect to the foot (42) about a foot pivot axis (44) running transversely with respect to the spindle drum axis (20).

3. Multi-spindle lathe according to Claim 2, **characterized in that** an articulated arm (52) with a first pivot joint (54), which has a first pivot axis (56) running transversely with respect to the foot pivot axis (44), is mounted on the pivot-arm base (46), and **in that** the articulated arm (52) has a first arm (58), which leads from the first pivot axis (56), a second arm (64), which can be pivoted with respect to the first arm (58), by means of an articulated joint (60), about an axis of articulation (62) which is parallel to the first pivot axis (56), and a gripper arm (70), which can pivot with respect to the second arm (64) about a second pivot axis (68) by means of a second pivot joint (66).

4. Multi-spindle lathe according to Claim 3, **characterized in that** the second arm (64) has an axis of rotation (72) which runs transversely with respect to the axis of articulation (62) and with respect to the second pivot axis (68) and about which the second pivot joint (66) can rotate with respect to the articulated joint (60).

5. Multi-spindle lathe according to Claim 3 or 4, **characterized in that** the gripper arm (70) has an axis of rotation (78) which runs transversely with respect to the second pivot axis (68) and about which a workpiece gripper (74) can rotate with respect to the second pivot joint (66).

6. Multi-spindle lathe according to one of Claims 2 to 5, **characterized in that** the foot pivot axis (44) runs transversely with respect to a plane (48) defined by a base surface (50) of the lathe frame.

7. Multi-spindle lathe according to one of Claims 2 to 6, **characterized in that** the foot pivot axis (44) runs approximately perpendicular to the plane (48).

8. Multi-spindle lathe according to one of the preceding claims, **characterized in that** the foot pivot axis (44) runs approximately in the vertical direction.

9. Multi-spindle lathe according to one of Claims 2 to 8, **characterized in that** the foot pivot axis (44) is disposed opposite a central region of the end face (34) of the spindle drum (16).

10. Multi-spindle lathe according to Claim 9, **characterized in that** the foot pivot axis (44) runs close to the spindle drum axis (20).

11. Multi-spindle lathe according to one of Claims 2 to 10, **characterized in that** the foot pivot axis (44) intersects the spindle drum axis (20).

12. Multi-spindle lathe according to one of the preceding claims, **characterized in that** a workpiece transfer space (92) is disposed at a lower level than the pivot-arm base (46).

13. Multi-spindle lathe according to one of the preceding claims, **characterized in that** the workpiece transfer space (92) is disposed approximately at the level of a substructure (12) of the lathe frame (10).

14. Multi-spindle lathe according to one of the preceding claims, **characterized in that** a workpiece transfer space (92) is disposed in a region which extends in front of the end face (34) of the spindle drum (16).

15. Multi-spindle lathe according to Claim 14, **characterized in that** the workpiece transfer space (92') is disposed between the end face (34) and the foot (42).

16. Multi-spindle lathe according to one of Claims 1 to 14, **characterized in that** the workpiece transfer space (92) is disposed on an opposite side of the foot pivot axis (44) from the working space (36).

17. Multi-spindle lathe according to one of the preceding claims, **characterized in that** the pivot-arm handling unit (40) is formed in such a manner that it allows access to workpieces (W) disposed in all the workpiece spindles (S, SS).

18. Multi-spindle lathe according to one of the preceding claims, **characterized in that** a control unit (80) for the pivot-arm handling device (40) is provided, which when conveying workpieces (W) between the workpiece transfer space (92) and the workpiece spindles (S, SS), moves the articulated arm (52) substantially in a plane (82, 84) running perpendicular to the axis of articulation (62) and executes a rotation of the pivot-arm base (46) about the foot pivot axis (44) through less than 90°.

19. Multi-spindle lathe according to one of the preceding claims, **characterized in that** a control unit (80) is provided, for the pivot-arm handling unit (40), which control unit, in order to insert and/or remove workpieces (W) into/from the workpiece spindles (S, SS), moves the pivot-arm base (46) substantially only within an angular range (δ) about the foot pivot axis (44) which corresponds to twice the angular range (γ) which is required in order to gain access to all the workpiece spindles (S, SS) in all the spindle stations (ST).

20. Multi-spindle lathe according to one of the preceding claims, **characterized in that** the workpiece-accommodating means (32) for the workpieces (W) and tool carriers (24) for tools (30) are disposed on the same side of the working space (36).

## Revendications

1. Tour multibroche comprenant un bâti de machine (10), un tambour à broches (16) positionné de manière rotative autour d'un axe (20) sur le bâti de machine (10) avec un côté frontal (34) se trouvant en face d'un espace de travail (36), une multitude de broches à pièces (S) positionnées de manière rotative autour d'axes de broches (A) dans le tambour à broches (16) avec des logements de pièces (32) se trouvant en face de l'espace de travail (36) dans lesquels logements peuvent être placées des pièces (W) pour être usinées dans le dit espace de travail (36), et un manipulateur de pièces articulé (40) configuré de telle sorte qu'à l'aide de celui-ci on peut placer et / ou retirer des pièces (W) dans les logements des pièces (32) des broches à pièces (S, SS) en passant par l'espace de travail (36), **caractérisé en ce que** le manipulateur de pièces articulé (40) comprend un pied (42) disposé sur un côté de l'espace de travail (36) opposé au côté frontal (34) du tambour à broches (16) et **en ce que** le pied (42) est suspendu à une superstructure (18) du bâti de machine (10) s'étendant sur l'espace de travail (36).

2. Tour multibroche selon la revendication 1, **caractérisé en ce que** le manipulateur de pièces articulé (40) comprend une base du manipulateur (46) tournant autour du pied (42) avec un axe de pivotement du pied (44) agencé transversalement par rapport à l'axe (20) du tambour à broches.

3. Tour multibroche selon la revendication 2, **caractérisé en ce qu'**un bras articulé (52) est positionné sur la base du manipulateur (46) avec une première articulation pivotante (54) comprenant un premier axe de pivotement (56) agencé transversalement par rapport à l'axe de pivotement du pied (44), et **en ce que** le bras articulé (52) comprend un premier bras (58) partant du premier axe de pivotement (56), un deuxième bras (64) pivotable par rapport au premier bras (58) au moyen d'un joint d'articulation (60) tournant autour d'un axe d'articulation (62) parallèle au premier axe de pivotement (56), et un bras preneur (70) pivotable par rapport au deuxième bras (64) au moyen d'une deuxième articulation pivotante (66) tournant autour d'un deuxième axe de pivotement (68).

4. Tour multibroche selon la revendication 3, **caractérisé en ce que** le deuxième bras (64) comprend un axe de rotation (72) agencé transversalement par rapport à l'axe d'articulation (62) et au deuxième axe de pivotement (68), axe de rotation autour duquel la deuxième articulation pivotante (66) peut tourner par rapport au joint d'articulation (60).

5. Tour multibroche selon la revendication 3 ou 4, **caractérisé en ce que** le bras preneur (70) comprend un axe de rotation (78) agencé transversalement par rapport au deuxième axe de pivotement (68), axe de rotation autour duquel un preneur de pièce (74) peut tourner par rapport à la deuxième articulation pivotante (66).

6. Tour multibroche selon l'une quelconque des revendications 2 à 5, **caractérisé en ce que** l'axe de pivotement du pied (44) est agencé transversalement par rapport à un plan (48) défini par une surface de base (50) du bâti de machine.

7. Tour multibroche selon l'une quelconque des revendications 2 à 6, **caractérisé en ce que** l'axe de pivotement du pied (44) est agencé environ verticalement par rapport au plan (48).

8. Tour multibroche selon l'une quelconque des revendications précédentes, **caractérisé en ce que** l'axe de pivotement du pied (44) est agencé environ verticalement.

9. Tour multibroche selon l'une quelconque des revendications 2 à 8, **caractérisé en ce que** l'axe de pivotement du pied (44) est disposé en face d'une zone centrale du côté frontal (34) du tambour à broches (16).

10. Tour multibroche selon la revendication 9, **caractérisé en ce que** l'axe de pivotement du pied (44) est agencé à proximité de l'axe du tambour à broches (20).

11. Tour multibroche selon l'une quelconque des revendications 2 à 10, **caractérisé en ce que** l'axe de pivotement du pied (44) coupe l'axe du tambour à broches (20).

12. Tour multibroche selon l'une quelconque des revendications précédentes, **caractérisé en ce qu'**une zone de remise des pièces (92) est prévue laquelle est disposée plus bas que la base du manipulateur (46).

13. Tour multibroche selon l'une quelconque des revendications précédentes, **caractérisé en ce que** la zone de remise des pièces (92) est disposée environ à hauteur d'une infrastructure (12) du bâti de machine (10).

14. Tour multibroche selon l'une quelconque des revendications précédentes, **caractérisé en ce qu'**une zone de remise des pièces (92) est disposée dans un espace s'étendant devant le côté frontal (34) du tambour à broches (16).

15. Tour multibroche selon la revendication 14, **caractérisé en ce que** la zone de remise des pièces (92) est disposée entre le côté frontal (34) et le pied (42).

16. Tour multibroche selon l'une quelconque des revendications 1 à 14, **caractérisé en ce que** la zone de remise des pièces (92) est disposée sur un côté de l'axe de pivotement du pied (44) situé en face de l'espace de travail (36).

17. Tour multibroche selon l'une quelconque des revendications précédentes, **caractérisé en ce que** le manipulateur de pièces articulé (40) est configuré de telle sorte qu'il permet un accès aux pièces (W) disposées dans l'ensemble des broches à pièces (S, SS).

18. Tour multibroche selon l'une quelconque des revendications précédentes, **caractérisé en ce qu'**un contrôle (80) du manipulateur de pièces articulé (40) est prévu lequel contrôle déplace le bras articulé (52) dans un plan (82, 84) essentiellement vertical par rapport à l'axe d'articulation (62), lors du transport de pièces (W) entre la zone de remise des pièces (92) et les broches à pièces (S, SS), lequel contrôle exécutant aussi une rotation inférieure à 90 ° de la base du manipulateur (46) autour de l'axe de pivotement du pied (44).

19. Tour multibroche selon l'une quelconque des revendications précédentes, **caractérisé en ce qu'**un contrôle (80) du manipulateur de pièces articulé (40) est prévu lequel contrôle déplace la base du manipulateur (46) essentiellement dans une zone angulaire (δ) seulement, autour de l'axe de pivotement du pied (44), en vue du chargement de pièces (W) dans les broches à pièces (S, SS) et / ou de leur prélèvement depuis ces dernières, ladite zone angulaire correspondant au double de la zone angulaire (γ) nécessaire à l'accès à l'ensemble des broches à pièces (S, SS) dans l'ensemble des stations à broches (ST).

20. Tour multibroche selon l'une quelconque des revendications précédentes, **caractérisé en ce que** les logements des pièces (32) destinés aux pièces (W) de même que les porte-outils (24) destinés à des outils (30) sont disposés sur le même côté que celui de l'espace de travail (36).
